# DEMANDE DE BREVET EUROPEEN

(11) **EP 3 079 246 A1**
(43) Date de publication de la demande: **12.10.2016**
(21) Numéro de dépôt: 15193343.9
(22) Date de dépôt: 06.11.2015
(51) Int. Cl.: H02M 1/16, H02M 1/32, H02M 7/162, H02M 1/08, H02M 7/06, H02M 7/12

(54) **CONVERTISSEUR ALTERNATIF-CONTINU À LIMITATION DU COURANT D'APPEL**

(30) Priorité: 07.04.2015 FR 1552985
(71) Demandeur: STMicroelectronics (Tours) SAS, 37100 Tours (FR)
(72) Inventeur: GONTHIER, Laurent, 37000 TOURS (FR); NINA, Muriel, 37210 VOUVRAY (FR); PICHON, Romain, 37380 REUGNY (FR)
(74) Mandataire: Thibon, Laurent

(57) **Abrégé**

L'invention concerne un convertisseur alternatif-continu comportant : une première borne (12) et une deuxième borne (14), destinées à recevoir une tension alternative (Vac) ; une troisième borne (16) et une quatrième borne (18), destinées à fournir une première tension continue (Vdc) ; un pont de redressement (3) dont des bornes d'entrée (32, 34) sont, respectivement, couplées à la première borne, et connectées à la deuxième borne, et dont des bornes de sortie (36, 38) sont respectivement connectées aux troisième et quatrième bornes, une première branche du pont comportant, entre les bornes de sortie, deux thyristors en série, respectivement à gâchette d'anode (Th1) et à gâchette de cathode (Th2), le point milieu de l'association en série étant connecté à une première desdites bornes d'entrée et le thyristor à gâchette d'anode étant commandable par extraction d'un courant de sa gâchette.

## Description

### Domaine

La présente description concerne de façon générale les dispositifs électroniques et, plus particulièrement, les convertisseurs alternatif-continu. La présente description s'applique de façon générale à tout système utilisant un pont redresseur, par exemple les circuits de commande de moteurs électriques, les chargeurs électriques, les alimentations à découpage, etc.

### Exposé de l'art antérieur

On connait de nombreuses architectures de convertisseurs alternatif-continu, basées sur des éléments de redressement commandables (thyristors, par exemple) ou non (diodes), montés en pont redresseur, alimentés par une tension alternative et fournissant une tension continue, cette tension continue étant le cas échéant elle-même reconvertie en tension alternative.

On souhaite généralement limiter le courant d'appel, c'est-à-dire les pics de courant qui se produisent à chaque alternance de la tension alternative tant que la tension aux bornes d'un condensateur en sortie du pont de redressement n'a pas atteint un niveau suffisant et ceci notamment dans les phases de démarrage.

Le document US 2012/230075 décrit un exemple de convertisseur alternatif-continu.

### Résumé

Un mode de réalisation pallie tout ou partie des inconvénients des circuits usuels de commande d'un convertisseur de puissance.

Un mode de réalisation vise à proposer un circuit de limitation de courant d'appel dans un convertisseur de puissance.

Un mode de réalisation propose une solution compatible avec une fonction de doublage de tension au niveau d'un pont redresseur alimenté par la tension alternative.

Ainsi, un mode de réalisation prévoit un convertisseur alternatif-continu comportant :
une première borne et une deuxième borne, destinées à recevoir une tension alternative ;
une troisième borne et une quatrième borne, destinées à fournir une première tension continue ;
un pont de redressement dont des bornes d'entrée sont, respectivement, couplées à la première borne et connectées à la deuxième borne, et dont des bornes de sortie sont respectivement connectées aux troisième et quatrième bornes,
une première branche du pont comportant, entre les bornes de sortie, deux thyristors en série, respectivement à gâchette d'anode et à gâchette de cathode, le point milieu de l'association en série étant connecté à une première desdites bornes d'entrée et le thyristor à gâchette d'anode étant commandable par extraction d'un courant de sa gâchette.

Selon un mode de réalisation, une deuxième branche du pont comporte une première diode et une deuxième diode en série entre les bornes de sortie, le point milieu de l'association en série des diodes étant connecté à une deuxième desdites bornes d'entrée.

Selon un mode de réalisation, le thyristor à gâchette de cathode est commandé par injection d'un courant dans sa gâchette.

Selon un mode de réalisation, les thyristors sont tous les deux commandés par extraction d'un courant de leur gâchette.

Selon un mode de réalisation, les thyristors sont commandés par un même signal impulsionnel.

Selon un mode de réalisation, les thyristors sont commandés en angle de phase.

Selon un mode de réalisation, deux éléments capacitifs en série relient les troisième et quatrième bornes, un commutateur connectant le point milieu entre les éléments capacitifs à la deuxième borne.

Selon un mode de réalisation, les gâchettes des thyristors sont commandées par un même transformateur, excité par un signal alternatif.

Selon un mode de réalisation, les gâchettes de thyristor sont commandées par un même transformateur, excité par un signal carré périodique, positif et négatif.

Selon un mode de réalisation, le convertisseur comporte en outre :
un transformateur de génération, à partir d'au moins une troisième diode connectée à la première desdites bornes d'entrée, d'une première tension continue d'alimentation d'un circuit de commande des thyristors et d'une seconde tension continue appliquée à ladite première des bornes d'entrée.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique, un exemple d'architecture usuelle de convertisseur alternatif-continu équipé d'un circuit de limitation du courant d'appel ;
la figure 2 représente, de façon schématique, une modification du montage de la figure 1 pour réaliser un convertisseur doubleur de tension ;
la figure 3 représente, de façon schématique, un mode de réalisation de convertisseur alternatif-continu ;
la figure 4 est un schéma électrique partiel d'un mode de réalisation d'un circuit de commande du convertisseur de la figure 3 ;
la figure 5 est une vue en coupe schématique de réalisation d'un thyristor à gâchette de cathode à courant de gâchette positif ;
la figure 6 est une vue en coupe schématique de réalisation d'un thyristor à gâchette de cathode à courant de gâchette négatif ;
les figures 7A, 7B, 7C et 7D illustrent, par des chronogrammes, le fonctionnement du convertisseur de la figure 3, en mode doubleur de tension ;
les figures 8A, 8B, 8C et 8D illustrent, par des chronogrammes, le fonctionnement du convertisseur de la figure 3, en mode suiveur ;
la figure 9 représente un autre mode de réalisation d'un convertisseur ; et
la figure 10 représente de façon partielle un élément de commande du convertisseur.

### Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les éléments utiles à la compréhension des modes de réalisation décrits ont été représentés et seront détaillés. En particulier, les circuits alimentés par le convertisseur de puissance n'ont pas été détaillés, les modes de réalisation décrits étant compatibles avec les applications usuelles. Dans la description, le terme "connecté" désigne une connexion directe entre deux éléments, alors que les termes "couplé" et "relié" désignent une connexion entre deux éléments qui peut être directe ou par l'intermédiaire d'un ou plusieurs autres éléments. Lorsque l'on fait référence aux termes "environ", "approximativement" ou "de l'ordre de", cela signifie à 10 % près, de préférence à 5 % près.

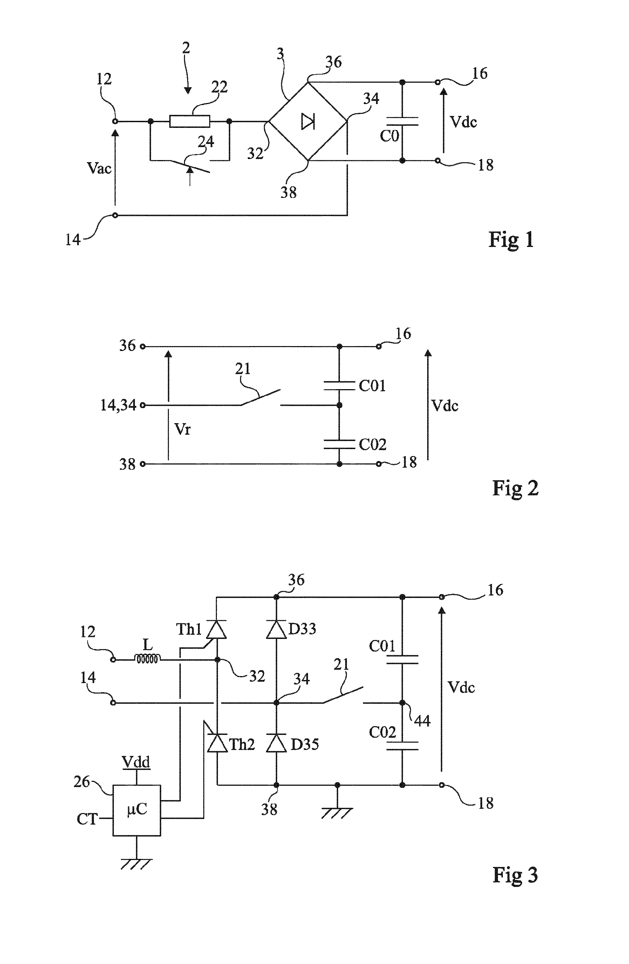

La figure 1 représente, de façon schématique, un exemple d'architecture usuelle de convertisseur alternatif-continu équipé d'un circuit de limitation du courant d'appel.

Deux bornes d'entrée 12 et 14 sont destinées à recevoir une tension alternative Vac, par exemple, la tension du réseau de distribution électrique (par exemple 230 ou 120 volts, 50 ou 60 Hz). La borne 12 est reliée, par l'intermédiaire d'un montage 2 limiteur de courant d'appel, à une première borne 32 d'entrée de redressement d'un pont redresseur 3 (par exemple, double alternance) dont la seconde borne 34 d'entrée de redressement est connectée à la borne 14. Les sorties redressées 36 et 38 du pont sont respectivement connectées à des bornes de sortie 16 et 18, fournissant une tension continue Vdc. Un condensateur C0 de stockage et lissage relie les bornes 16 et 18. Le montage limiteur de courant d'appel est constitué d'une résistance 22, reliant les bornes 12 et 32, et d'un interrupteur 24 actionnable pour court-circuiter la résistance 22. Au démarrage (condensateur C0 déchargé), l'interrupteur 24 est ouvert et la résistance 22 limite le courant de charge du condensateur C0. En régime établi, l'interrupteur 24 est fermé pour court-circuiter la résistance et limiter les pertes.

Des solutions plus élaborées utilisent, entre une borne d'entrée d'application de la tension alternative et le pont redresseur, un dispositif de commande de l'angle de phase de mise en conduction du pont, c'est-à-dire de sélection de l'instant, à chaque alternance de la tension alternative, à partir duquel le pont de redressement est alimenté. Dans un tel cas, le démarrage du convertisseur requiert une source de tension pour alimenter un circuit de commande de l'interrupteur de contrôle de phase. Les solutions actuelles font souvent appel à des montages complexes.

La figure 2 représente, de façon schématique, une modification du montage de la figure 1 pour réaliser un convertisseur doubleur de tension. La borne 34 est reliée, par l'intermédiaire d'un interrupteur 21, à un point milieu entre deux éléments capacitifs C01 et C02 connectant les bornes 16 et 18 (le condensateur C0 pouvant être supprimé). En supposant que les éléments C01 et C02 sont de même capacité, la tension Vdc entre les bornes 16 et 18 correspond, en régime établi, au double de la tension crête Vac entre les bornes 12 et 14.

Dans le montage de la figure 1, la présence de l'interrupteur 24 engendre des pertes en régime permanent. En pratique, cet interrupteur peut être réalisé par un triac et les pertes sont liées à la résistance série à l'état passant de ce triac.

La figure 3 représente, de façon schématique, un mode de réalisation de convertisseur alternatif-continu.

On retrouve un pont redresseur dont des bornes d'entrées 32 et 34 sont couplées à des première et deuxième bornes 12 et 14 d'application d'une tension alternative Vac et dont des bornes de sortie redressées 36 et 38 sont connectées à des troisième et quatrième bornes 16 et 18 de fourniture d'une tension continue Vdc. Au moins un élément capacitif connecte entre elles les bornes 16 et 18. Dans l'exemple de la figure 3, un élément inductif est intercalé entre une borne de fourniture de la tension Vac (ici, la borne 12) et le pont.

Toutefois, à la différence du pont redresseur de la figure 1, le pont redresseur 3 est ici constitué de deux éléments de redressement commandables de type thyristor Th1 et Th2 connectés dans une branche du pont, c'est-à-dire en série entre les bornes 36 et 38. Dans l'exemple de la figure 3, le thyristor Th1, à gâchette d'anode, connecte la borne 32 à la borne 36 avec son anode côté borne 32, tandis que le thyristor Th2, à gâchette de cathode, connecte la borne 38 à la borne 32 avec son anode côté borne 38. Deux diodes D33 et D35 complètent le pont en reliant respectivement la borne 34 à la borne 36 et la borne 38 à la borne 34, les anodes des diodes D33 et D35 étant respectivement côté borne 34 et côté borne 38.

Dans l'exemple de la figure 3, on suppose un convertisseur susceptible de fonctionner en mode doubleur de tension ou en mode suiveur. Par conséquent, on prévoit deux éléments capacitifs C01 et C02 (de même valeur) en série entre les bornes 16 et 18 et un élément 21 (par exemple, un cavalier, un interrupteur, un relais, etc.) connectant le point milieu 44 entre les éléments capacitifs C01 et C02 à la borne 14 (donc à la borne 34). Lorsque la connexion 21 est ouverte (pas de liaison entre la borne 14 et le noeud 44), le pont 3 fonctionne en mode suiveur, c'est-à-dire que la valeur maximale de la tension Vdc correspond à la valeur crête de la tension Vac (aux pertes près). Quand la connexion 21 est fermée, le convertisseur fonctionne en mode doubleur de tension, c'est-à-dire que la valeur maximale de la tension Vdc correspond environ au double de la valeur crête de la tension Vac.

Les thyristors Th1 et Th2 sont commandés par un circuit électronique, par exemple, un microcontrôleur 26, chargé de générer des impulsions de commande des thyristors Th1 et Th2 et contrôlant les gâchettes de ces thyristors par le biais d'un ou deux coupleurs isolés (non représentés en figure 3), de technologie optique, magnétique ou capacitive. Le microcontrôleur 26 reçoit différentes consignes CT ou mesures afin de générer ces impulsions aux bons moments en fonction, entre autres, des besoins de la charge alimentée par le convertisseur.

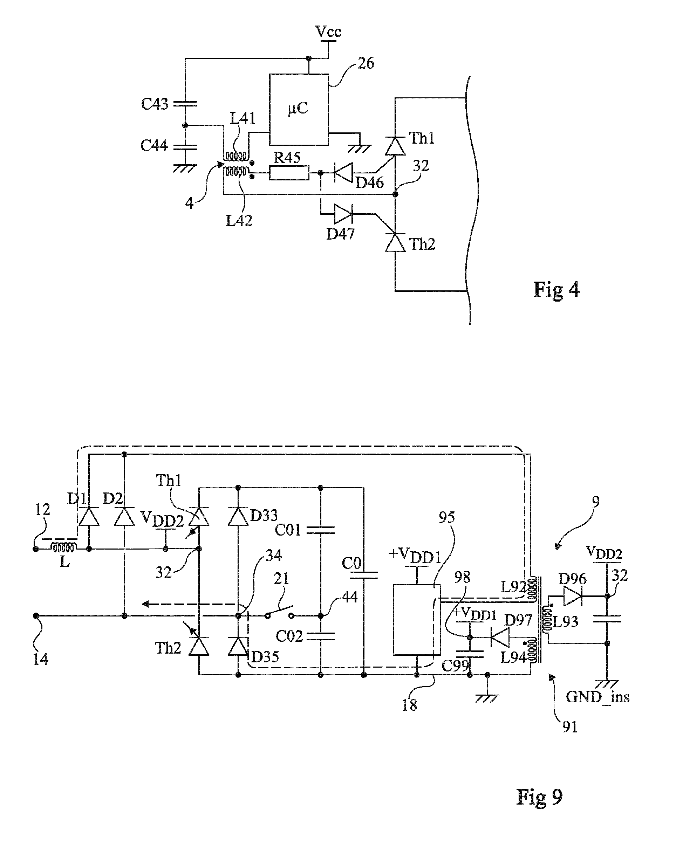

La figure 4 représente, partiellement, un mode de réalisation d'un circuit de commande des thyristors Th1 et Th2 du montage de la figure 3.

Les thyristors Th1 et Th2 sont choisis de manière que leur commande soit référencée au même point. Ainsi le thyristor Th1 est un thyristor à gâchette d'anode. Sa commande est donc référencée par rapport à la borne 32. Le thyristor Th2 est un thyristor à gâchette de cathode. Sa commande est donc référencée par rapport à la même borne 32.

Dans le mode de réalisation de la figure 4, les thyristors Th1 et Th2 sont choisis pour fonctionner respectivement par extraction de courant de gâchette et par injection de courant de gâchette.

Dans ce circuit de la figure 4, un premier enroulement L41 d'un transformateur 4 reçoit une commande impulsionnelle d'un microcontrôleur 26 alimenté par une tension continue Vcc. L'autre extrémité de l'enroulement L41 est reliée au point milieu d'une association en série de deux éléments capacitifs C43 et C44 entre la borne d'alimentation Vcc et la masse. Un deuxième enroulement L42 du transformateur 4 a une extrémité connectée à la borne 32 et son autre extrémité couplée aux gâchettes des thyristors Th1 et Th2. Ce couplage est réalisé par l'intermédiaire d'une résistance série R45 optionnelle et de deux diodes D46 et D47 connectant respectivement l'enroulement L42 (ou la résistance R45) aux gâchettes des thyristors Th1 et Th2. La gâchette d'anode du thyristor Th1 est connectée à l'anode de la diode D46 tandis que la gâchette de cathode du thyristor Th2 est reliée à la cathode de la diode D47, la cathode de la diode D46 et l'anode de la diode D47 étant connectées à l'enroulement L42 (ou à la résistance R45).

Le circuit de la figure 4 permet donc d'injecter à la fois un courant de gâchette au thyristor Th2, et d'extraire un courant de gâchette du thyristor Th1. Les deux thyristors sont donc commandés à chaque fois qu'une impulsion alternative (de type +Vcc/2 -Vcc/2) est appliquée au primaire L41 du transformateur 4.

Si l'on souhaite distinguer les deux commandes, par exemple en ne commandant le thyristor Th1 que lors des demi-alternances positives de la tension Vac, et le thyristor Th2 que lors des demi-alternances négatives de la tension Vac, cela est possible en appliquant aux bornes de L41 respectivement pendant ces deux types de demi-alternances, un signal de type -Vcc / 0 (pour amorcer le thyristor Th1), et un signal de type +Vcc / 0 (pour amorcer le thyristor Th2). De tels signaux disposant d'une composante continue, le transformateur 4 ne devra pas disposer de matériau magnétique saturable afin d'éviter la saturation de ce matériau et assurer le bon fonctionnement du transfert des signaux de commande. On pourra ainsi par exemple utiliser un transformateur sans noyau magnétique (ou "transformateur à air").

Selon un autre mode de réalisation, les thyristors Th1 et Th2 sont choisis pour fonctionner tous les deux par extraction de courant de leur gâchette. Ainsi, une même tension d'alimentation Vdd dite négative (c'est-à-dire dont le niveau haut, VDD, est connecté à la borne 32, elle-même reliée à la borne 12 du secteur) suffit à alimenter les deux thyristors Th1 et Th2. Cette même alimentation pourrait servir à alimenter les gâchettes de triacs dont la référence de commande serait connectée à cette borne 32. De tels triacs auraient l'utilité de contrôler des charges à courant alternatif alimentées par la tension Vac.

La réalisation d'une fonction thyristor à gâchette de cathode, commandable par extraction de courant est connue. On peut par exemple utiliser un triac en série avec une diode pour le rendre unidirectionnel.

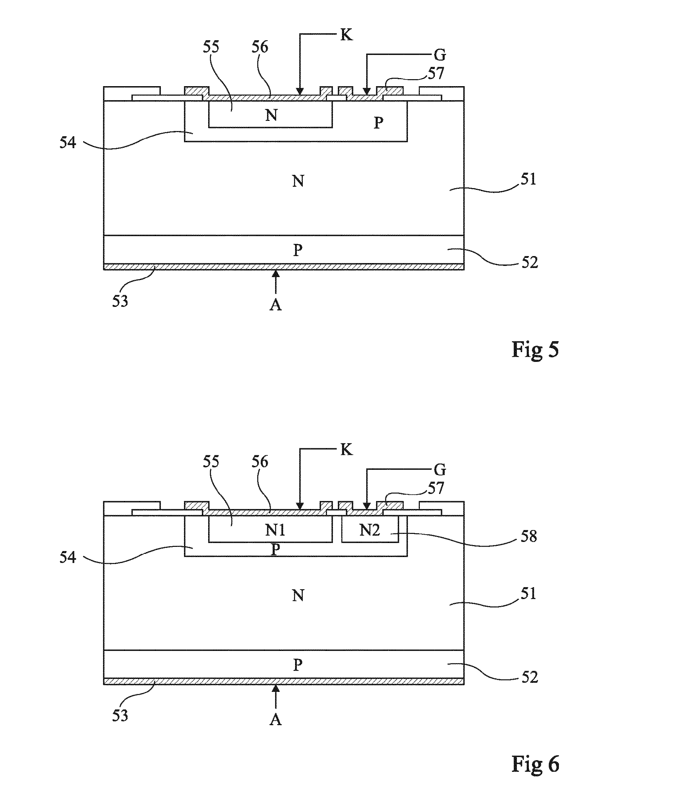

Les figures 5 et 6 sont des coupes schématiques de réalisation de thyristors à gâchette de cathode respectivement à courant de gâchette positif ou injection de courant (cas le plus courant) et à courant de gâchette négatif ou extraction de courant.

Selon ces exemples, le thyristor est réalisé dans un substrat 51 de type N. En face arrière, une couche 52 de type P définit une région d'anode, l'électrode d'anode A étant obtenue par une métallisation 53 de reprise de contact de cette région 52. Un caisson 54 de type P est réalisé en face avant. Une région de cathode 55 de type N (N1) est formée dans ce caisson 54 et une métallisation 56 de reprise de contact de cette région 55 définit l'électrode de cathode K.

Dans le cas de la figure 5, un contact 57 de gâchette est réalisé au niveau du caisson de type P 54. Ainsi, l'injection d'un courant de gâchette amorce le thyristor si celui-ci est convenablement polarisé (tension anode-cathode positive).

Dans le cas de la figure 6, une région 58 de type N (N2) est ajoutée sous le contact 57 de gâchette. Cette région 58 permet un amorçage par un courant de gâchette négatif (c'est-à-dire circulant depuis la cathode K jusqu'à la gâchette G) en autorisant une injection d'électrons dans le substrat 51 de type N qui correspond à la base du transistor bipolaire de type PNP formé par les régions 52-51-54.

En variante, la région 58 peut être scindée au moins en deux afin de permettre un contact direct de la région P (54) sur la gâchette. Une telle variante, appelée "trou de court-circuit" permet d'améliorer l'immunité aux transitoires de tension du thyristor et permet aussi la commande par un courant de gâchette positif (c'est-à-dire circulant depuis la gâchette G jusqu'à la cathode K). Cette variante permet donc à ce thyristor d'être utilisé au niveau du composant Th2 dans le circuit de la figure 4.

Pour réaliser la fonction de limiteur de courant d'appel au démarrage du convertisseur, l'utilisation de thyristors rend possible une commande en angle de phase et ainsi d'augmenter progressivement la durée de conduction des thyristors afin d'assurer une charge progressive des condensateurs connectés entre les bornes 36 et 38 et ainsi limiter le courant d'appel absorbé entre les bornes d'entrée 12 et 14 à la mise sous tension du circuit.

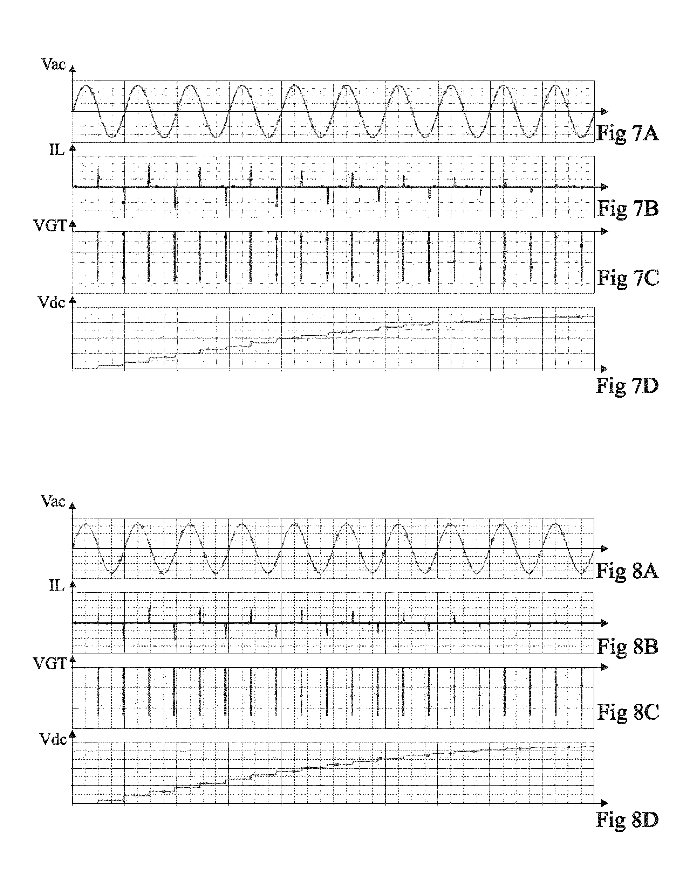

Les figures 7A, 7B, 7C et 7D illustrent, par des chronogrammes, le fonctionnement du convertisseur de la figure 3, dans le mode de réalisation où les thyristors Th1 et Th2 fonctionnent tous les deux par extraction de courant de leur gâchette, en mode doubleur de tension (interrupteur 21 fermé). Ces figures illustrent le fonctionnement au démarrage du convertisseur, c'est-à-dire tant que la tension Vdc n'a pas atteint sa valeur de régime permanent, approximativement le double de la valeur crête de la tension Vac (environ 320 volts). La figure 7A représente des exemples d'allures de la tension Vac. La figure 7B illustre l'allure du courant IL dans l'inductance L. La figure 7C illustre les allures des tensions de gâchette V_{GT} des thyristors Th1 et Th2 (un pic sur deux correspondant à chacun des thyristors). La figure 7D illustre l'allure de la tension Vdc obtenue.

Dans l'exemple des figures 7A à 7D, on suppose une tension Vac de 320 volts, crête à crête, avec une fréquence de 50 Hz.

Les figures 8A, 8B, 8C et 8D illustrent, par des chronogrammes, le fonctionnement du convertisseur de la figure 3, dans le mode de réalisation où les thyristors Th1 et Th2 fonctionnent tous les deux par extraction de courant de leur gâchette, en mode suiveur (interrupteur 21 ouvert). Ces figures illustrent le fonctionnement au démarrage du convertisseur, c'est-à-dire tant que la tension Vdc n'a pas atteint sa valeur de régime permanent, approximativement le double de la valeur crête de la tension Vac (environ 320 volts). La figure 8A représente des exemples d'allures de la tension Vac. La figure 8B illustre l'allure du courant IL dans l'inductance L. La figure 8C illustre les allures des tensions de gâchette V_{GT} des thyristors Th1 et Th2 (un pic sur deux correspondant à chacun des thyristors). La figure 8D illustre l'allure de la tension Vdc obtenue.

Dans l'exemple des figures 8A à 8D, on suppose une tension Vac de 640 volts, crête à crête, avec une fréquence de 50 Hz. L'amplitude de la tension Vdc obtenue en mode suiveur (figure 8D) est donc d'environ 320 volts comme en figure 7D.

La commande des thyristors Th1 et Th2 en angle de phase, en étant mis en conduction dans les phases décroissantes de la tension Vac redressée, en fonction du niveau de charge des condensateurs, permet bien de limiter les courants d'appel au démarrage en effectuant un démarrage en douceur (Soft Start) comme le montrent les figures 7 et 8.

Dans la représentation des figures 7B et 8B, les amplitudes du courant IL selon les alternances, dépendent de la consommation en aval du convertisseur et illustrent un exemple arbitraire.

La figure 9 représente un autre mode de réalisation d'un convertisseur alternatif-continu.

Par rapport au mode de réalisation de la figure 3, on prévoit un circuit 9 de génération d'une tension VDD2 à appliquer à la borne 32. Cette tension VDD2 est générée par un transformateur 91 générant, à partir d'un premier enroulement L92, deux tensions continues VDD1 et VDD2 aux bornes de deux enroulements L93 et L94 couplés (l'enroulement L93 étant couplé à l'enroulement L92 et l'enroulement L94 étant couplé à l'enroulement L93). Une diode D1 relie la borne 32 à l'enroulement L92 (anode côté borne 32) dont l'autre extrémité est reliée à la borne 18 (donc la borne 38) par un circuit électronique de commande 95 intégrant généralement un transistor MOSFET qui contrôle en mode découpage le courant de l'enroulement L92. Une extrémité de l'enroulement L93 est reliée par une diode D96 (anode côté enroulement) à la borne 32. Son autre extrémité constitue la référence de la tension VDD2. Une extrémité de l'enroulement L94 est reliée, par une diode D97 (anode côté enroulement) à une borne 98 fournissant la tension VDD1. L'autre extrémité de l'enroulement L94 est connectée à la borne 18 et un condensateur C99 relie les bornes 98 à 18. Le cas échéant, une diode D2 relie la borne 14 à l'enroulement L92 pour alimenter le circuit 95 à partir d'un redressement double alternance lorsque Th2 est rendu conducteur par le circuit de commande 26 de la figure 3.

Un tel mode de réalisation permet de limiter le courant d'appel si les thyristors Th1 et Th2 sont commandés en angle de phase pour réaliser la fonction de démarrage en douceur (Soft Start).

En figure 9, un condensateur C0 est en outre placé en parallèle avec l'association en série des condensateurs C01 et C02.

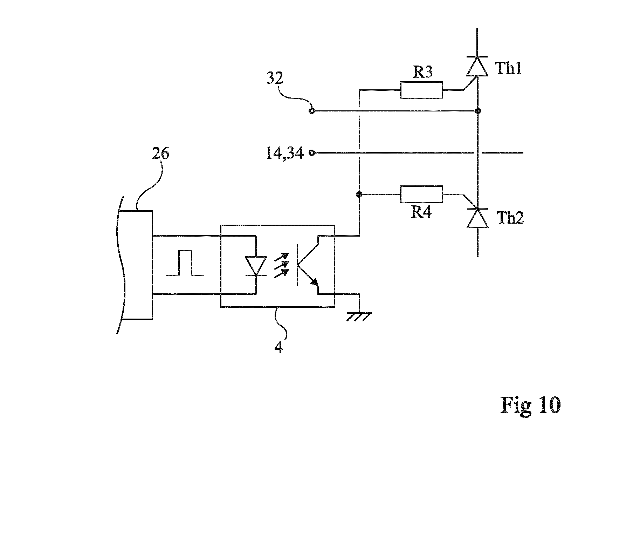

La figure 10 illustre, par un schéma partiel, un exemple de commande des thyristors Th1 et Th2 par des impulsions générées par le microcontrôleur. Les gâchettes des thyristors Th1 et Th2 sont reliées, par des résistances R3 et R4, au collecteur d'un optotransistor d'un optocoupleur 4 dont l'émetteur est à la masse. Une photodiode de l'optocoupleur 4 est excitée par impulsions par le microcontrôleur 26.

Divers modes de réalisation ont été décrits. Diverses variantes et modifications apparaîtront à l'homme de l'art. Par exemple, les thyristors peuvent être remplacés par des triacs, chacun en série avec une diode. De plus, la mise en oeuvre pratique des modes de réalisation qui ont été décrits est à la portée de l'homme du métier à partir des indications fonctionnelles données ci-dessus. En particulier, la programmation du microcontrôleur dépend de l'application et les réalisations décrites sont compatibles avec les applications usuelles utilisant un microcontrôleur ou équivalent pour commander un convertisseur.

## Revendications

1. Convertisseur alternatif-continu comportant :
une première borne (12) et une deuxième borne (14), destinées à recevoir une tension alternative (Vac) ;
une troisième borne (16) et une quatrième borne (18), destinées à fournir une première tension continue (Vdc) ;
un pont de redressement (3) dont des bornes d'entrée (32, 34) sont, respectivement, couplées à la première borne, et connectées à la deuxième borne, et dont des bornes de sortie (36, 38) sont respectivement connectées aux troisième et quatrième bornes,
une première branche du pont comportant, entre les bornes de sortie, deux thyristors en série, respectivement à gâchette d'anode (Th1) et à gâchette de cathode (Th2), le point milieu de l'association en série étant connecté à une première desdites bornes d'entrée et le thyristor à gâchette d'anode étant commandable par extraction d'un courant de sa gâchette.

2. Convertisseur selon la revendication 1, dans lequel une deuxième branche du pont comporte une première diode (D33) et une deuxième diode (D35) en série entre les bornes de sortie (16, 18), le point milieu de l'association en série des diodes étant connecté à une deuxième (34) desdites bornes d'entrée.

3. Convertisseur selon la revendication 1 ou 2, dans lequel le thyristor à gâchette de cathode (Th2) est commandé par injection d'un courant dans sa gâchette.

4. Convertisseur selon la revendication 1 ou 2, dans lequel les thyristors (Th1, Th2) sont tous les deux commandés par extraction d'un courant de leur gâchette.

5. Convertisseur selon l'une quelconque des revendications 1 à 4, dans lequel les thyristors sont commandés par un même signal impulsionnel.

6. Convertisseur selon l'une quelconque des revendications 1 à 5, dans lequel les thyristors sont commandés en angle de phase.

7. Convertisseur selon l'une quelconque des revendications 1 à 6, dans lequel deux éléments capacitifs en série (C01, C02) relient les troisième et quatrième bornes (16, 18), un commutateur (21) connectant le point milieu (44) entre les éléments capacitifs à la deuxième borne (14).

8. Convertisseur selon la revendication 3, dans lequel les gâchettes des thyristors sont commandées par un même transformateur (4), excité par un signal alternatif.

9. Convertisseur selon la revendication 3, dans lequel les gâchettes des thyristors sont commandées par un même transformateur, excité par un signal carré périodique, positif et négatif.

10. Convertisseur selon la revendication 2 et l'une quelconque des revendications 3 à 6, comportant en outre :
un transformateur (9) de génération, à partir d'au moins une troisième diode (D1) connectée à la première (32) desdites bornes d'entrée, d'une première tension continue (VDD1) d'alimentation d'un circuit de commande (95) des thyristors et d'une seconde tension continue (VDD2) appliquée à ladite première des bornes d'entrée.
